Europäisches Patentamt

European Patent Office

Office européen des brevets

(19)

(11) Publication number: **0 401 920**

**A2**

## (12) EUROPEAN PATENT APPLICATION

(21) Application number: **90201413.3**

(22) Date of filing: **05.06.90**

(51) Int. Cl.5: **H04N 7/087**

The title of the invention has been amended (Guidelines for Examination in the EPO, A-III, 7.3).

(30) Priority: **08.06.89 GB 8913203**

(43) Date of publication of application:
**12.12.90 Bulletin 90/50**

(84) Designated Contracting States:
**DE FR GB IT**

(71) Applicant: **PHILIPS ELECTRONIC AND ASSOCIATED INDUSTRIES LIMITED**
**Philips House 188 Tottenham Court Road London W1P 9LE(GB)**
(84) **GB**

Applicant: **N.V. Philips' Gloeilampenfabrieken**

Groenewoudseweg 1
**NL-5621 BA Eindhoven(NL)**
(84) **DE FR IT**

(72) Inventor: **Bugg, Richard Edward Frederick**
**c/o Philips Components, New Road**
**Mitcham Junction, Mitcham Surrey CR4 4XY(GB)**
Inventor: **Summers, Christopher Paul**
**c/o Philips Components, New Road**
**Mitcham Junction, Mitcham Surrey CR4 4XY(GB)**

(74) Representative: **Cole, Bernard Victor et al**
**PHILIPS ELECTRONICS Patents and Trade Marks Department Philips House 188 Tottenham Court Road**
**London W1P 9LE(GB)**

(54) **Amplitude estimator arrangements for digital data.**

(57) An amplitude estimator arrangement particularly for use in a digital teletext decoder comprises an absolute function circuit (1) for affording a constant polarity signal (VA), a first circuit including a multiplexer (7), accumulator (9,10) and divider (12) for affording an output (MO) which corresponds to a mean output for each data line, and a second circuit including an accumulator (16,17,19,20) for affording a required output amplitude estimate (AE) which corresponds to the weighted average over a plurality of data lines. The arrangement is especially suitable for deriving a slicing level signal used in reconstituting the teletext data.

*Fig.2.*

This invention relates to amplitude estimator arrangements for digital data signals and is especially applicable to such arrangements for use in digital teletext decoders.

Teletext decoders are known for use, for example, in television receivers for receiving and decoding teletext data which is transmitted as part of the normal television signal, the teletext data being displayed as pages of text and/or graphics on the normal television screen. Up to the present time, teletext decoders have made use of both analogue and digital processing techniques and it is now proposed to provide a fully digital system which will complement the digital television receivers which are currently becoming available.

The teletext data is transmitted in binary digital form and inevitably suffers distortion due to the transmission medium, whether this be over air or via cable. One of the functions of a teletext decoder is to reconstitute the teletext data to remove any distortion affects.

The usual way of reconstituting the teletext data is to derive a slicing level which ideally lies midway between the positive and negative peaks of the received teletext data. The teletext data is then compared with the slicing level to determine the state of the teletext data.

One problem which exists in using the above mentioned slicing level is that the teletext data tends not to remain at a constant level and adaptive systems have been developed which seek to vary the slicing level in sympathy with any change in level in the teletext data. Such a system is described in U.K. Patent No. 2048618B and makes use of a sequence of clock pulses in the teletext data which normally occur at the start of each data line and which precede the actual data pulses in order to derive the slicing level. Such a system is generally satisfactory with the slicing level being set at the beginning of each data line and then takes account of the fact that the level of the teletext data can vary over the period of a teletext data line, for example, due to co-channel interference. A problem which generally exists is that teletext data is only transmitted on some of the lines that occur in the field blanking interval of the normal television picture signal so actual teletext data is only received intermittently. This also can affect the generation of the slicing level.

It is an object of the present invention to provide an improved form of amplitude estimator arrangement for deriving a slicing level signal, and which is eminently suitable for use in a teletext decoder.

According to one aspect of the present invention there is provided an amplitude estimator arrangement for estimating the amplitude of a received data signal which comprises successive groups of digital data, said arrangement being characterised by first means which is operable on a predetermined portion of the digital data of each of said successive groups for affording a first output which is indicative of the mean amplitude of the predetermined portion of said group, second means for affording a second output which is indicative of the weighted average of the first outputs corresponding to a plurality of said groups, and third means for controlling said second means in dependence upon a validity check carried out on each of said groups, whereby said second output corresponds to a weighted average of the first outputs relating to a plurality of said groups having a required validity, the required amplitude estimate being derived from said second output.

The invention according to the said first aspect may be characterised by an absolute function arrangement which is operable on the received data signal and which affords a constant polarity output to said first means.

One preferred arrangement may be characterised in that said first means comprises subtractor means in which the said required amplitude estimate is subtracted from the output of said absolute function arrangement, first accumulator means which is selectively operable on the output of said subtractor means for accumulating information during said predetermined portion, and first divider means operable on the accumulated output from said first accumulator means for dividing it by a suitable number to afford said first output, and may further include first multiplexer means for applying the output of said subtractor means during said predetermined or a zero output outside of a said portion to said first accumulator means.

Conveniently, said second means may comprise second accumulator means which is selectively operable on the first output from said first divider means for accumulating a plurality of said first outputs having said required validity, and second divider means operable on the output of said second accumulator means for affording said required amplitude estimate, and said third means may comprise second multiplexer means for applying the first output from said first divider means in the presence thereof or a zero output to said second accumulator means in dependence upon a validity check signal corresponding to each of said groups.

Another preferred arrangement may be characterised in that said first means comprises first accumulator means which is selectively operable on the output of said absolute function arrangement and for accumulating information during said predetermined portion, and first divider means operable on the accumulated output from said first accumulator means for dividing it by said predetermined number to afford said first output, and may further include multiplexer means for applying the output of said absolute function generator during said predetermined portion or a zero output outside of a said portion to said first accumulator means.

Conveniently, said second means may comprise second accumulator means which is operable on the first output from said first divider means for selectively accumulating a fraction of each said first output having said required validity and for affording said required amplitude estimate, in which case said second accumulator means may comprise adder means for adding a fraction $1/x$ of each said first output to a fraction

$$\frac{x - 1}{x}$$

of said required amplitude estimate for each said first output having said required validity.

It is especially envisaged that the amplitude estimator arrangement according to the aforesaid first aspect will be incorporated in a teletext decoder, in which case the received data signal will take the form of teletext data, and the successive groups of digital data will correspond to the data present in successive data lines of said teletext data. Conveniently, the teletext data will be represented in two's complement form.

According to a second aspect of the present invention there is provided a method of estimating the amplitude of a received data signal which comprises successive groups of digital data, said method being characterised by a first step which is operable on a predetermined portion of the digital data of each of said successive groups for affording afirst output which is indicative of the mean amplitude of the predetermined portion of said group, a second step for affording a second output which is indicative of the weighted average of the first outputs corresponding to a plurality of said groups in dependence upon a validity check carried out on each of said groups, and a third step of deriving a required amplitude estimate from said second output.

Some exemplary embodiments of the invention will now be described reference being made to the accompanying drawings, in which:

Figure 1 is a block schematic diagram of one form of amplitude estimator arrangement according to the present invention; and

Figure 2 is a block schematic diagram of a modified form of amplitude estimator arrangement ·of Figure 1.

The amplitude estimator arrangements to be described have been designed to be incorporated in a digital teletext decoder for the purpose of deriving a data slicing level against which received teletext data can be compared in order that it may be reconstituted to remove any distortion affects that may have been introduced as has hereinbefore been described.

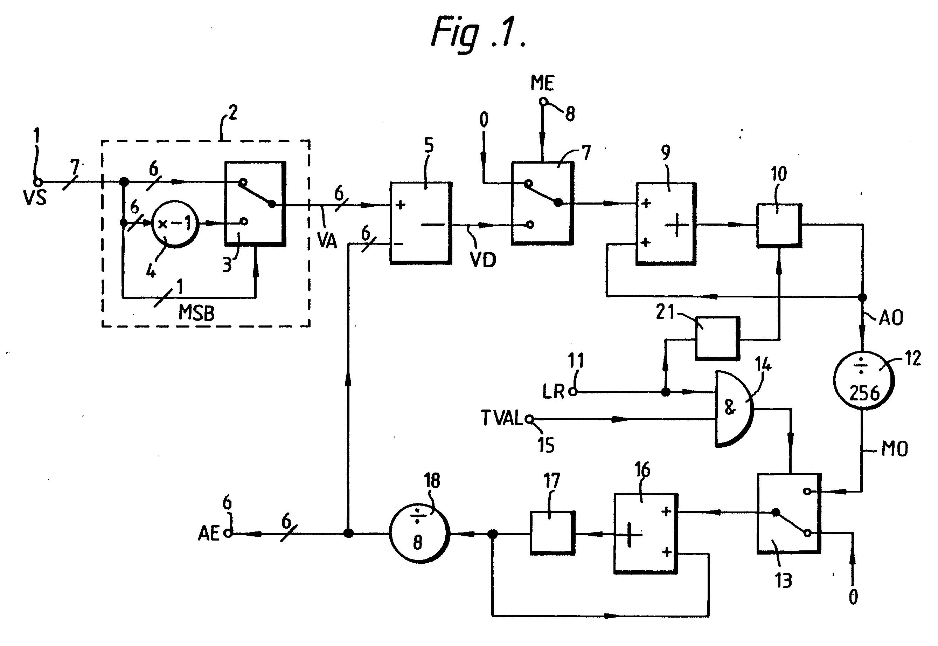

In Figure 1 of the drawings there is shown an amplitude estimator arrangement to which a video signal VS effectively sampled at the teletext data rate and from which the slicing level has been subtracted is applied and which affords an output amplitude estimate AE of the amplitude of the applied video signal VS. The video signal will conveniently take the form of successive digital words each of which takes the form of a 7-bit number in two's complement form, the most significant bit (MSB) of each of which corresponds to the sign of the respective word. As has been stated hereinbefore, teletext data is only transmitted during some of the lines that exist in the field-blanking interval of the normal television picture signal so that the signal VS which is applied to the amplitude estimator arrangement of Figure 1 will include lines of non-teletext data as well as lines of teletext data, these latter commonly being referred to as teletext data lines. It is one of the functions of a teletext decoder to determine whether any particular line of data is a valid teletext data line or not and to generate a signal TVAL if the line is a valid teletext data line. The amplitude estimator arrangement to be described makes use of the signal TVAL but the method of generating this signal is considered to be well known, for instance by obtaining a valid framing code, and outside the scope of the present invention.

The principle of operation of the amplitude estimator arrangements to be described is that a mean amplitude estimate is generated in respect of each line of the video signal and from these line estimates a mean overall amplitude estimate over a plurality of lines is generated, it being ensured that only those line estimates which correspond to valid teletext data lines are used in deriving the overall amplitude estimate.

In this way, the overall amplitude estimate is available throughout a complete teletext data line and is based on the line estimate of a number of data lines.

In Figure 1, the received video signal VS is applied to an input 1. In the case of a teletext data line, this video signal VS represents the amplitude values of successive teletext pulses. These amplitude values are applied to an absolute function circuit 2 which has the effect of converting each of the negative words of the video signal VS to make them positive words so as to afford an output VA which is of constant i.e. positive polarity.

The absolute function circuit 2 consists of a two-position multiplexer 3 which is controlled by the MSB of each word of the signal VS so that either the VS signal, or the VS signal as converted by a multiplier 4 with a multiplication of -1, is selected in dependence upon whether the MSB indicates that a particular word is positive or negative.

The output VA from the multiplexer 3 is fed to the positive input of a subtractor 5 to the negative input of which is applied the output amplitude estimate AE afforded by the output 6 of the arrangement. The subtractor 5 subtracts the two inputs VA and AE applied to it and affords a difference output VD. It will be appreciated that the difference output VD will be zero if the amplitude estimate AE corresponds to the output VA.

The difference output VD is applied to one input of a further two-position multiplexer 7, to the other input of which is connected a zero signal. The multiplexer 7 is controlled by a multiplexer enable signal which is applied to input 8 thereof, it typically being arranged that the multiplexer enable signal causes the multiplexer 7 to select the difference output VD for a period corresponding to 256 of the digital words out of that period when teletext data is present in each data line, the zero signal being selected for the remaining digital words of the data line.

The 256 words of the difference signal VD are applied to an accumulator circuit consisting of an adder 9, the output of which is applied to a one sample period delay 10, whose output is fed back as a second input to the adder 9. The accumulator thus formed accumulates the 256 words of the VD signal selected by the multiplexer 7 and affords an accumulated output AO corresponding to the 256 words of each data line. It is arranged that the one sample period delay 10 has its output reset to zero towards the end of each data line after the 256 words have been accumulated by means of a line reset signal LR one sample period wide applied to input 11 and to a one sample period delay 21.

The accumulated output AO is applied to a divide-by-256 divider 12 which affords a mean output MO which corresponds to the mean of the 256 selected words of the difference signal VD, of each data line.

The mean output MO corresponding to each data line is applied to one input of a further two-position multiplexer 13, to the other input of which is connected a zero signal.

The multiplexer 13 is controlled by an AND gate 14 to which is connected the line reset signal LR and also the TVAL signal already referred to which is applied to input 15 and which indicates whether a data line being processed is a valid teletext data line or not.

If a particular data line is a valid teletext data line then on the occurrence of the line reset signal LR the multiplexer 13 selects the mean output MO from the divide-by-256 divider 12 for the sample period and otherwise selects the zero signal.

The output from the multiplexer 13 is applied to a further accumulator circuit consisting of an adder 16, the output of which is applied to a one sample period delay 17 whose output is fed back as a second input to the adder 16. The accumulator thus formed accumulates the MO outputs corresponding to the selected, valid, data lines and the accumulated output is applied to a further divider 18, typically a divide-by-8 divider, which affords the output amplitude estimate AE on output 6 and its time constant, and which is also fed back to the subtractor circuit 5. The output amplitude estimate AE corresponds to the weighted average of the amplitude estimates of a number of preceding data lines, the weighting being in favour of the more recent data lines. The arrangement operates to maintain the difference output VD from the subtractor 5 at zero so that the amplitude estimate AE closely approximates the constant polarity signal VA and can be used for generating the slicing level for the received teletext data.

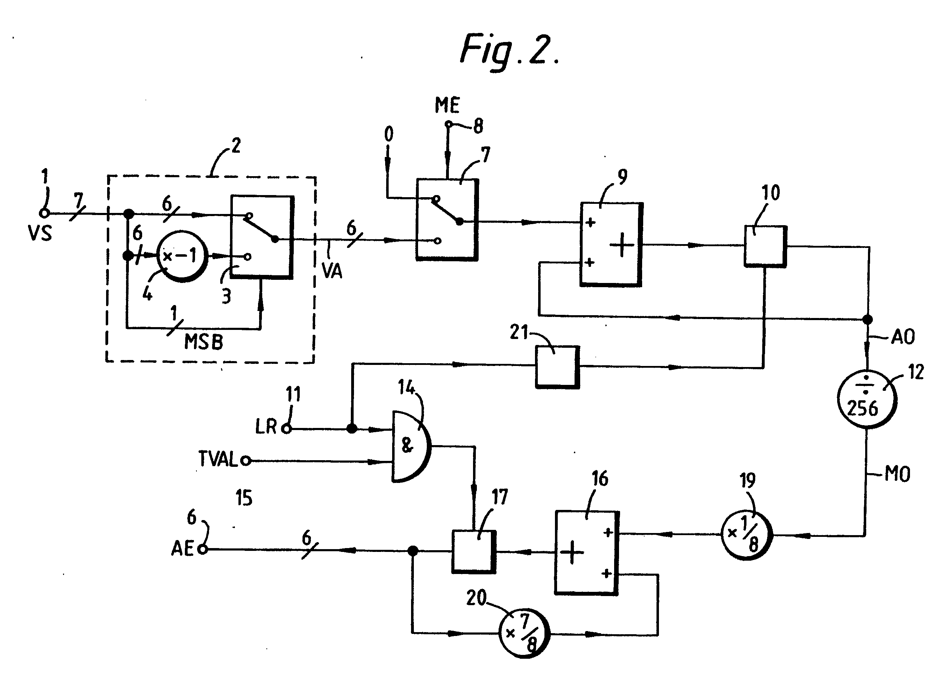

In Figure 2 of the drawings there is depicted a modification of the amplitude estimator arrangement of Figure 1 which operates directly on the constant polarity signal VA rather than on the difference between the signal VA and the amplitude estimate AE as in the arrangement of Figure 1. For convenience, the parts of the arrangement of Figure 2 which correspond to those already described with reference to Figure 1 have been given the same references.

In the arrangement of Figure 2, the subtractor 5 of Figure 1 has been dispensed with and the output VA from the multiplexer 3 is applied directly to the multiplexer 7.

The multiplexer 13 of Figure 1 is also dispensed with and the accumulator formed by adder 16 and delay 17 is modified by providing a multiplier 19 (typically by 1/8) which operates on the MO signal applied to the adder 16 and by providing a further multiplier 20 (typically by 7/8) which operates on the accumulated output fed back from the delay 17 to the second input of the adder 16. The output from the AND gate 14 clocks the delay 17 and the delay 17 affords the required amplitude estimate directly via the output 6. The basic operation of the arrangement of Figure 2 is the same as that for Figure 1 and this modification may also be applied to Figure 1.

Although the arrangement of Figure 1 is more complex than that of Figure 2, it has been found to be more effective in generating the required output amplitude estimate as the word length is smaller.

From reading the present disclosure, other modifications will be apparent to persons skilled in the art. Such modifications may involve other features which are already known se and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation or modification thereof which would be apparent to persons skilled in the art, whether or not it relates to the same invention as presently claimed in any claim and whether or note it mitigates any or all of the same technical problems as does the present invention. The applicants hereby reserve the right to formulate new claims to such features and/or combinations of such features during the prosecution of the present application or of any further application derived therefrom.

## Claims

1. An amplitude estimator arrangement for estimating the amplitude of a received data signal which comprises successive groups of digital data, said arrangement being characterised by first means which is operable on a predetermined portion of the digital data of each of said successive groups for affording a first output which is indicative of the mean amplitude of the predetermined portion of said group, second means for affording a second output which is indicative of the weighted average of the first outputs corresponding to a plurality of said groups, and third means for controlling said second means in dependence upon a validity check carried out on each of said groups, whereby said second output corresponds to a weighted average of the first outputs relating to a plurality of said groups having a required validity, the required amplitude estimate being derived from said second output.

2. An arrangement as claimed in claim 1, characterised by an absolute function arrangement which is operable on the received data signal and which affords a constant polarity output to said first means.

3. An arrangement as claimed in claim 2, characterised in that said first means comprises subtractor means in which the said required amplitude estimate is subtracted from the output of said absolute function arrangement, first accumulator means which is selectively operable on the output of said subtractor means for accumulating information during said predetermined portion, and first divider means operable on the accumulated output from said first accumulator means for dividing it by a suitable number to afford said first output.

4. An arrangement as claimed in claim 3, characterised by first multiplexer means for applying the output of said subtractor means during said predetermined portion or a zero output outside of a said portion to said first accumulator means.

5. An arrangement as claimed in claim 3 or claim 4, characterised in that said second means comprises second accumulator means which is selectively operable on the first output from said first divider means for accumulating a plurality of said first outputs having said required validity, and second divider means operable on the output of said second accumulator means for affording said required amplitude estimate.

6. An arrangement as claimed in claim 5, characterised in that said third means comprises second multiplexer means for applying the first output from said first divider means in the presence thereof or a zero output to said second accumulator means in dependence upon a validity check signal corresponding to each of said groups.

7. An arrangement as claimed in claim 2, characterised in that said first means comprises first accumulator means which is selectively operable on the output of said absolute function arrangement and for accumulating information during said predetermined portion, and first divider means operable on the accumulated output from said first accumulator means for dividing it by said predetermined number to afford said first output.

8. An arrangement as claimed in claim 7, characterised by multiplexer means for applying the output of said absolute function generator during said predetermined portion or a zero output outside of a said portion to said first accumulator means.

9. An arrangement as claimed in claim 8, characterised in that said second means comprises second accumulator means which is operable on the first output from said first divider means for selectively accumulating a fraction of each said first outputs having said required validity and for affording said required amplitude estimate.

10. An arrangement as claimed in claim 9, characterised in that said second accumulator means comprises adder means for adding a fraction 1/x of each said first output to a fraction

$$\frac{x - 1}{x}$$

of said required amplitude estimate for each said first output having said required validity.

11. An arrangement as claimed in any preceding claim, characterised in that the received data signal takes the form of teletext data, and in that the successive groups of digital data correspond to the data present in successive data lines of said teletext data.

12. An arrangement as claimed in claim 11, characterised in that the teletext data is sampled and represented in two's complement form.

13. A method of estimating the amplitude of a received data signal which comprises successive groups of digital data, said method being characterised by a first step which is operable on a predetermined portion of the digital data of each of said successive groups for affording a first output which is indicative of the mean amplitude of the predetermined portion of said group, a second step for affording a second output which is indicative of the weighted average of the first outputs corresponding to a plurality of said groups, in dependence upon a validity check carried out on each of said groups, and a third step of deriving a required amplitude estimate from said second output.

Fig. 1.

Fig. 2.